# EUROPEAN PATENT SPECIFICATION

(11) **EP 3 165 138 B1**
(45) Date of publication and mention of the grant of the patent: **04.09.2019**
(21) Application number: 16197087.6
(22) Date of filing: 03.11.2016
(51) Int. Cl.: A47J 37/06

(54) **HOUSEHOLD ELECTRICAL APPLIANCES WITH THE CONTAINER**
ELEKTRISCHE HAUSHALTSGERÄTE MIT DEM BEHÄLTER
APPAREILS ÉLECTROMÉNAGERS AVEC RÉCIPIENT

(30) Priority: 04.11.2015 CN 201520874111 U
(43) Date of publication of application: 10.05.2017
(73) Proprietor: BSH Hausgeräte GmbH, 81739 München (DE)
(72) Inventor: Li, Zhenghai, 210046 Nanjing (CN); Lu, Peng, Nanjing, Jiangsu 210046 (CN); Wu, Liansen, 210046 Nanjing (CN)

(56) References cited:
- EP-A1- 1 400 195
- CN-U- 203 953 386
- CN-U- 204 146 880
- DE-U1-202009 017 688
- FR-A1- 2 866 539

## Description

### Technical Field

The present invention relates to a household appliance having a container, and in particular, to a cover body structure of a household appliance, which is mainly applied to a rice cooker, a capsule coffee maker, a fruit juice maker, or the like.

### Related Art

An existing household appliance such as a rice cooker or an electric pressure cooker generally includes a machine body and a cover body. One end of the cover body and the machine body are hinged by a rotating shaft, the rotating shaft passes through several torsion springs, and the other end of the cover body is provided with a cover-opening mechanism. During use, a button of the cover-opening mechanism is pressed and the cover body is bounced off under the action of the torsion springs. However, a bounce-off speed of the cover body in such a structure is fully dependent on elastic force of the torsion springs. The elastic force of the torsion springs may be excessively large due to factors such as the material of the torsion springs, and the bounce-off speed of the cover body may be excessively rapid when a user opens the cover body, which causes unbalancing of the machine body, resulting in spilling of food from a container, hurt of an individual, and low safety and reliability.

At present, a buffering device is used in a household appliance in the market to achieve the purpose of deceleration. Although the purpose of buffering or decelerating a cooker cover can be achieved to a certain extent, relatively large friction force may be apt to cause wearing of a contact surface, resulting in a buffering failure. Moreover, the design is complicated and extra costs are added.

The patent application EP 140 01 95 A1 discloses a domestic appliance comprising two panels pivoted together by a hinge that extends along a hinge axis and that comprises on the one hand at least one male knuckle connected to a first panel and, on the other hand, adjacent to this in the axial continuation of the male knuckle, at least one female knuckle connected to the second panel and comprising, on the one hand, a first envelope connected to the second panel and, on the other hand, a complementary second envelope connected to an independent component that has complementary fixing means designed to engage with fixing means on the second panel in such a way as to connect the independent component to the second panel and produce the female knuckle, wherein each axial end of the female knuckle which is adjacent to a knuckle covers the adjacent axial end of a male knuckle and is formed by the corresponding axial end of the first envelope forming one part of a cylinder and by the corresponding axial end of the second envelope forming another and complementary part of the same cylinder in such a way as to imprison the axial end of the male knuckle.

At present, no effective solution has been provided with respect to the prior-art problems of unbalancing of a machine body caused by a rapid bounce speed during opening of a cover body of a household appliance having a container, and wearing of parts thereof during use.

### Summary

The present invention provides a household appliance having a container, so as to resolve at least the prior-art problem of unbalancing of a machine body caused by a rapid bounce speed during opening of a cover body of a household appliance having a container, and wearing of parts thereof during use.

To achieve the objective, an aspect of the present invention provides a household appliance having a container. The household appliance is a machine having a container and a cover body, such as a rice cooker, an electric pressure cooker, or a capsule coffee maker.

The household appliance having a container according to the invention has a cover body that closes the container; a mounting base disposed on the container, where the mounting base is provided thereon with a shaft and a projecting portion; and a pivot arm provided thereon with a pivot sleeve sleeved on the shaft; and disposed on the cover body, where the pivot arm is in rotational connection with the mounting base through the shaft, and further includes: a volute spiral spring connected to the mounting base and the pivot arm separately where a first end of the volute spiral spring is a ring-like structure, and is sleeved on the projecting portion; and a second end of the volute spiral spring is a ring-like structure, and is sleeved on the pivot sleeve; or the second end of the volute spiral spring is a hook-like structure, and is fixedly connected to a clamping block disposed on the pivot arm. The volute spiral spring is used to replace a reset spring or a torsion spring used at present, and is mounted on the pivot arm and the mounting base separately. The buffering effect is achieved by using the characteristic that the volute spiral spring tightens as the shaft rotates. That is, the volute spiral spring has relatively large recovering force during tightening, but the recovering force reduces accordingly during releasing. Therefore, no vibration is caused, and no extra buffering apparatus needs to be added.

By configuring one end of the volute spiral spring as a ring-like structure, the volute spiral spring can be directly sleeved on the projecting portion manually, which is convenient to operate and does not require use of a tool.

The second end of the volute spiral spring is a hook-like structure, and is fixedly connected to a clamping block disposed on the pivot arm. The other end of the volute spiral spring is configured as a hook-like structure, a corresponding clamping block is disposed on the pivot arm, and the hook-like portion is fixed on the clamping block, so as to fix the volute spiral spring. The operation likewise can be directly performed manually, and is simple and convenient and does not require use of a tool.

Preferably, the projecting portion is provided thereon with a fixed part for fixing the first end. The fixed part is disposed on the projecting portion to fix the volute spiral spring onto the projecting portion, so as to prevent same from sliding off the projecting portion.

Preferably, the fixed part is an elastic buckle. The first end of the volute spiral spring is sleeved on the projecting portion by pressing the buckle, and the volute spiral spring is fixed onto the projecting portion after the buckle is released.

Preferably, the elastic buckle and the projecting portion are integrally injection-molded. By integrally injection-molding, use and mounting of extra parts are avoided.

Preferably, the clamping block and the pivot sleeve are provided with a limit slot therebetween, where the second end of the volute spiral spring passes through the limit slot and is fixed onto the clamping block. A mounting position of the hook-like portion is further limited by the limit slot, so as to prevent the hook-like portion from offsetting from an operating position thereof.
Preferably, the volute spiral spring is detachably mounted on the mounting base and the pivot arm.

The present invention resolves the prior-art problems of unbalancing of a machine body caused by a rapid bounce speed during opening of a cover body of a household appliance having a container, and wearing of parts thereof during use. On the one hand, the cover body can be opened stably, and therefore the machine body does not vibrate. On the other hand, the design has a simple structure and reduces use of parts such as a buffering apparatus.

### Brief description of the drawings

The described accompanying drawings described herein are used to provide further understanding of the present invention and constitute a part of the present application. Exemplary embodiments of the present invention and description thereof are used to illustrate the present invention and do not constitute an improper limit to the present invention.
- FIG. 1: is a schematic structural diagram (1) of a household appliance in a first embodiment;
- FIG. 2: is a schematic structural diagram (2) of the household appliance in the first embodiment;
- FIG. 3: is a schematic enlarged diagram of an area A in FIG. 2;
- FIG. 4: is a schematic structural diagram of a volute spiral spring in the first embodiment;
- FIG. 5: is a schematic installation diagram of the volute spiral spring in the first embodiment;
- FIG. 6: is a schematic structural diagram of a cover body in the first embodiment;
- FIG. 7: is a schematic structural diagram of a volute spiral spring in a second embodiment; and
- FIG. 8: is a schematic installation diagram of the volute spiral spring in the second embodiment.

### Detailed description

The following describes the present invention in detail with reference to the accompanying drawings and the embodiments. It should be noted that the embodiments and the features in the embodiments in the present application can be combined with each other providing that no conflict occurs.

A household appliance having a container provided in the present invention may be a machine having a container and a cover body, such as a rice cooker, an electric pressure cooker, or a capsule coffee maker.

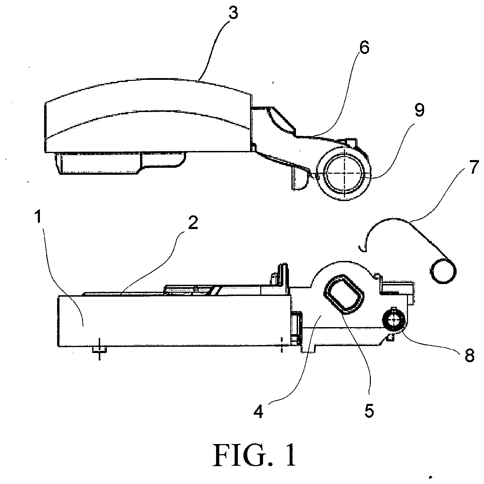

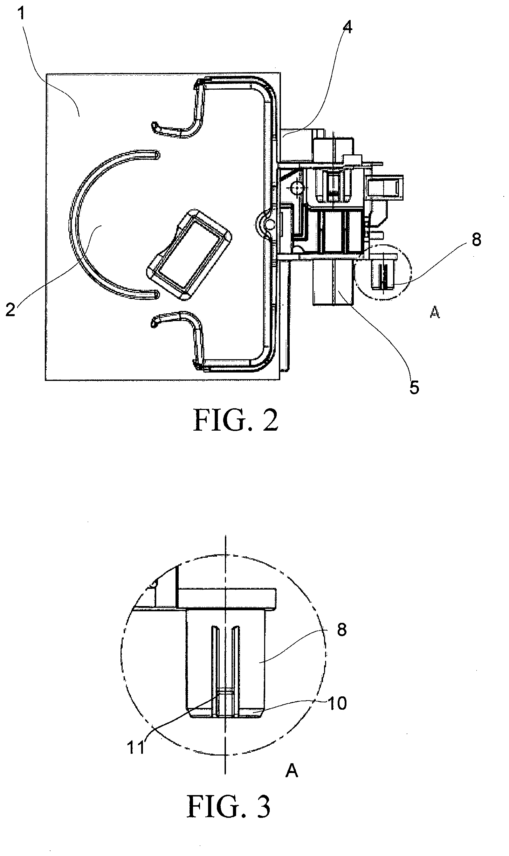

In a first embodiment, FIG. 1 is a schematic structural diagram (1) of the household appliance in the first embodiment, and FIG. 2 is a schematic structural diagram (2) of the household appliance in the first embodiment. As shown in FIG. 1 and FIG. 2:
The household appliance 1 has a container 2; a cover body 3 that closes the container 2; a mounting base 4 disposed on the container 2, where the mounting base is provided thereon with a shaft 5; and a pivot arm 6 disposed on the cover body 3. The pivot arm 6 is in rotational connection with the mounting base 4 through the shaft 5. The household appliance 1 further includes: a volute spiral spring 7 connected to the mounting base 4 and the pivot arm 6 separately.

The volute spiral spring 7 is used to replace a reset spring or a torsion spring used at present, and is detachably mounted on the pivot arm 6 and the mounting base 4 separately. The buffering effect is achieved by using the characteristic that the volute spiral spring 7 tightens as the shaft 5 rotates. That is, the volute spiral spring 7 has relatively large recovering force when the cover body is closed, but the recovering force reduces accordingly during opening of the cover body, so that no vibration is caused due to excessively large recovering force. The features all can be determined according to material coefficients of the volute spiral spring 7. No extra buffering apparatus needs to be added when the volute spiral spring 7 is used.

Specifically, as shown in FIG. 2, the mounting base 4 is provided thereon with a projecting portion 8, and a first end 71 of the volute spiral spring is mounted on the projecting portion 8; and the pivot arm 6 is provided thereon with a pivot sleeve 9 sleeved on the shaft 5, and a second end 72 of the volute spiral spring is mounted on the pivot sleeve 9.

Preferably, the first end 71 of the volute spiral spring is a ring-like structure, and is sleeved on the projecting portion 8. By the ring-like structure, the volute spiral spring can be directly sleeved on the projecting portion 8 manually, which is convenient to operate and does not require use of a tool.

Preferably, FIG. 3 is a schematic enlarged diagram of an area A in FIG. 2. As shown in FIG. 3, the projecting portion 8 is provided thereon with a fixed part 10 for fixing the first end 71. The fixed part is disposed on the projecting portion to fix the volute spiral spring onto the projecting portion, so as to prevent same from sliding off the projecting portion.

Preferably, as shown in FIG. 3, the fixed part 10 is an elastic buckle 11. The first end 71 of the volute spiral spring is sleeved on the projecting portion 8 by pressing the elastic buckle 11, and the first end 71 of the volute spiral spring 7 is fixed onto the projecting portion 8 after the elastic buckle 11 is released.

Preferably, the elastic buckle 11 and the projecting portion 8 are integrally injection-molded. By integrally injection-molding of components, use and mounting of extra parts (such as a buffering apparatus) are avoided, which is more convenient and cost effective.

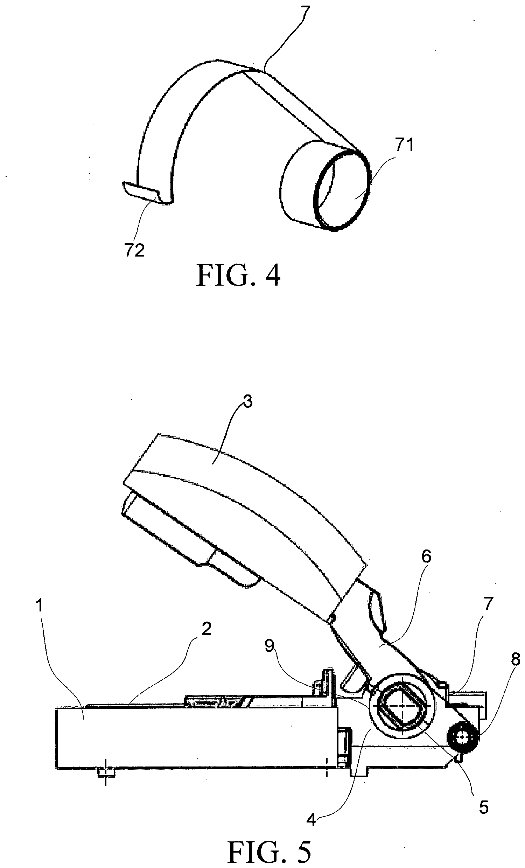

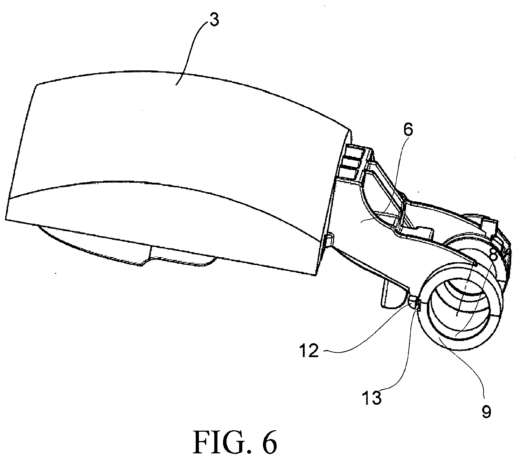

FIG. 4 is a schematic structural diagram of the volute spiral spring in the first embodiment, FIG. 5 is a schematic installation diagram of the volute spiral spring in the first embodiment, and FIG. 6 is a schematic structural diagram of the cover body in the first embodiment. As shown in FIG. 4, FIG. 5, and FIG. 6:
In this embodiment, the second end 72 of the volute spiral spring is a hook-like structure, and is fixedly connected to a clamping block 12 disposed on the pivot arm 6. By disposing a corresponding clamping block 12 on the pivot arm 9, a hook-like portion of the second end 72 of the volute spiral spring is fixed onto the clamping block 12, so as to fix the volute spiral spring 7. The operation likewise can be directly performed manually, and is simple and convenient and does not require use of a tool.

Preferably, as shown in FIG. 6, the clamping block 12 and the pivot sleeve 9 are provided with a limit slot 13 therebetween. The second end 72 of the volute spiral spring passes through the limit slot 13 and is fixed onto the clamping block 12. A mounting position of the hook-like portion is further limited by the limit slot 13, so as to prevent the hook-like portion from offsetting from an operating position thereof.

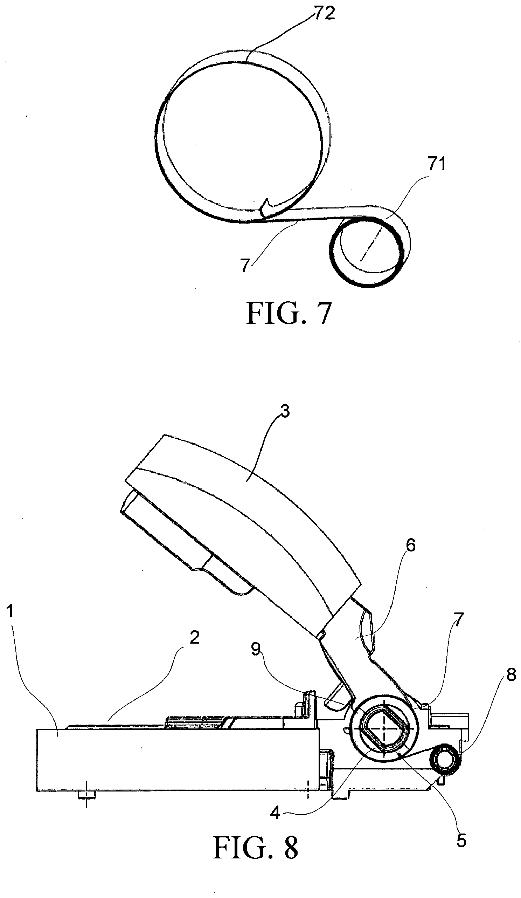

In a second embodiment, some technical features of the first embodiment are used. FIG. 7 is a schematic structural diagram of a volute spiral spring in the second embodiment, and FIG. 8 is a schematic installation diagram of the volute spiral spring in the second embodiment. As shown in FIG. 7 and FIG. 8:
The first end 71 of the volute spiral spring is a ring-like structure, and is sleeved on the projecting portion 8. The projecting portion 8 is provided thereon with a fixed part 10 (that is, the elastic buckle 11) for fixing the first end 71. The first end 71 of the volute spiral spring is sleeved on the projecting portion 8 by pressing the elastic buckle 11, and the first end 71 of the volute spiral spring 7 is fixed onto the projecting portion 8 after the elastic buckle 11 is released.

The second end 72 of the volute spiral spring is a ring-like structure, and is sleeved on the pivot sleeve 9. By configuring the other end 72 of the volute spiral spring also as a ring-like structure, the volute spiral spring can be manually sleeved on the pivot sleeve 9, which is convenient to operate and does not require use of a tool.

The present invention resolves the prior-art problems of unbalancing of a machine body caused by a rapid bounce speed during opening, of a cover body of a household appliance having a container, and wearing of parts thereof during use in the prior art. On the one hand, the cover body can be opened stably, and therefore the machine body does not vibrate. On the other hand, the design has a simple structure and reduces use of parts such as a buffering apparatus.

Various specific implementation manners described in the foregoing and shown in the accompanying drawings are only used to illustrate the present invention, and are not entirety of the present invention. Within the scope of the basic technical thought of the present invention, any types of modifications for the present invention made by persons ordinarily skilled in the art fall within the scope of the present invention which is defined by the scope of the claims.

## Claims

1. A household appliance (1) having a container (2), having a cover body (3) that closes the container (2); a mounting base (4) disposed on the container, wherein the mounting base (4) is provided thereon with a shaft (5) and a projecting portion (8); and a pivot arm (6) provided thereon with a pivot sleeve (9) sleeved on the shaft (5); and disposed on the cover body (3), wherein the pivot arm (6) is in rotational connection with the mounting base (4) through the shaft (5) and a volute spiral spring (7) connected to the mounting base (4) and the pivot arm (6) separately, **characterized in that**:
a first end (71) of the volute spiral spring (7) is a ring-like structure, and is sleeved on the projecting portion (8); and
a second end (72) of the volute spiral spring (7) is a ring-like structure, and is sleeved on the pivot sleeve; or
the second end (72) of the volute spiral spring (7) is a hook-like structure, and is fixedly connected to a clamping block (12) disposed on the pivot arm (9).

2. The household appliance according to claim 1, **characterized in that**:
the projecting portion (8) is provided thereon with a fixed part (10) for fixing the first end (71).

3. The household appliance according to claim 2, **characterized in that**:
the fixed part (10) is an elastic buckle (11).

4. The household appliance according to claim 3, **characterized in that**:
the elastic buckle (11) and the projecting portion (8) are integrally injection-molded.

5. The household appliance according to claim 1, **characterized in that**:
the clamping block (12) and the pivot sleeve (9) are provided with a limit slot (13) there between,
wherein the second end (72) of the volute spiral spring (7) passes through the limit slot (13) and is fixed onto the clamping block (12).

6. The household appliance according to claim 1, **characterized in that**:
the volute spiral spring (7) is detachably mounted on the mounting base (4) and the pivot arm (6).

## Patentansprüche

1. Haushaltsgerät (1), das Folgendes aufweist: einen Behälter (2), einen Abdeckungshauptteil (3), der den Behälter (2) schließt, einen Befestigungssockel (4), der an dem Behälter angeordnet ist, wobei der Befestigungssockel (4) mit einer Achse (5) und einem vorstehenden Abschnitt (8) versehen ist, und einen daran vorgesehenen Schwenkarm (6), der mit einer auf die Achse (5) aufgesteckten Gelenkhülse (9) versehen und an dem Abdeckungshauptteil (3) angeordnet ist, wobei sich der Schwenkarm (6) über die Achse (5) in Drehverbindung mit der Befestigungsbasis (4) befindet, und eine getrennt mit dem Befestigungssockel (4) und dem Schwenkarm (6) verbundene Spiralfeder (7), **dadurch gekennzeichnet, dass**:
es sich bei einem ersten Ende (71) der Spiralfeder (7) um eine ringartige Konstruktion handelt, die auf den vorstehenden Abschnitt (8) aufgesteckt ist, und
es sich bei einem zweiten Ende (72) der Spiralfeder (7) um eine ringartige Konstruktion handelt, die auf die Gelenkhülse aufgesteckt ist, oder
es sich bei dem zweiten Ende (72) der Spiralfeder (7) um eine hakenartige Konstruktion handelt, die fest mit einem am Schwenkarm (9) angeordneten Spannblock (12) verbunden ist.

2. Haushaltsgerät nach Anspruch 1, **dadurch gekennzeichnet, dass**:
der vorstehende Abschnitt (8) mit einem festen Teil (10) zum Fixieren des ersten Endes (71) versehen ist.

3. Haushaltsgerät nach Anspruch 2, **dadurch gekennzeichnet, dass**:
es sich bei dem festen Teil (10) um einen elastischen Verschluss (11) handelt.

4. Haushaltsgerät nach Anspruch 3, **dadurch gekennzeichnet, dass**:
der elastische Verschluss (11) und der vorstehende Abschnitt (8) einstückig spritzgegossen sind.

5. Haushaltsgerät nach Anspruch 1, **dadurch gekennzeichnet, dass**:
der Spannblock (12) und die Gelenkhülse (9) mit einem Begrenzungsschlitz (13) dazwischen versehen sind,
wobei das zweite Ende (72) der Spiralfeder (7) durch den Begrenzungsschlitz (13) verläuft und an dem Spannblock (12) fixiert ist.

6. Haushaltsgerät nach Anspruch 1, **dadurch gekennzeichnet, dass**:
die Spiralfeder (7) abnehmbar an dem Befestigungssockel (4) und dem Schwenkarm (6) angebracht ist.

## Revendications

1. Appareil électroménager (1) ayant un récipient (2), ayant un corps de couvercle (3) qui ferme le récipient (2) ; une base de montage (4) disposée sur le récipient, dans lequel la base de montage (4) est prévue sur celui-ci avec une tige (5) et une partie en saillie (8) ; et un bras de pivotement (6) prévu sur celui-ci avec un manchon de pivotement (9) emmanché sur la tige (5) ; et disposé sur le corps de couvercle (3), dans lequel le bras de pivotement (6) est en raccordement par rotation avec la base de montage (4) par le biais de la tige (5) et d'un ressort spiralé en volute (7) raccordé à la base de montage (4) et au bras de pivotement (6) séparément, **caractérisé en ce que** :
une première extrémité (71) du ressort spiralé en volute (7) est une structure de type bague et est emmanchée sur la partie en saillie (8) ; et
une seconde extrémité (72) du ressort spiralé en volute (7) est une structure de type bague et est emmanchée sur le manchon de pivotement ; ou
la seconde extrémité (72) du ressort spiralé en volute (7) est une structure de type crochet et est raccordée de manière fixe à un bloc de serrage (12) disposé sur le bras de pivotement (9).

2. Appareil électroménager selon la revendication 1, **caractérisé en ce que** :
la partie en saillie (8) est prévue sur celui-ci avec une partie fixe (10) servant à fixer la première extrémité (71).

3. Appareil électroménager selon la revendication 2, **caractérisé en ce que** :
la partie fixe (10) est une boucle élastique (11).

4. Appareil électroménager selon la revendication 3, **caractérisé en ce que** :
la boucle élastique (11) et la partie en saillie (8) sont moulées par injection d'un seul tenant.

5. Appareil électroménager selon la revendication 1, **caractérisé en ce que** :
le bloc de serrage (12) et le manchon de pivotement (9) sont dotés d'une encoche formant limite (13) entre eux,
dans lequel la seconde extrémité (72) du ressort spiralé en volute (7) passe à travers l'encoche formant limite (13) et est fixée sur le bloc de serrage (12).

6. Appareil électroménager selon la revendication 1, **caractérisé en ce que** :
le ressort spiralé en volute (7) est monté de manière détachable sur la base de montage (4) et le bras de pivotement (6).
